# EUROPEAN PATENT APPLICATION

(11) **EP 4 625 829 A1**
(43) Date of publication of application: **01.10.2025**
(21) Application number: 23896255.9
(22) Date of filing: 28.09.2023
(51) Int. Cl.: H04B 1/401, H04W 88/06

(54) **RADIO FREQUENCY MODULAR SET AND COMMUNICATION DEVICE**

(30) Priority: 30.11.2022 CN 202211529843
(71) Applicant: GUANGDONG OPPO MOBILE TELECOMMUNICATIONS CORP., LTD., Dongguan, Guangdong 523860 (CN)
(72) Inventor: CHEN, Feng, Dongguan, Guangdong 523860 (CN); TONG, Lin, Dongguan, Guangdong 523860 (CN)
(74) Representative: Penza, Giancarlo
(86) International application number: PCT/CN2023/122880
(87) International publication number: WO 2024/114099

(57) **Abstract**

The present application relates to a radio frequency modular set and a communication device. The radio frequency modular set comprises a plurality of power supply modules (10), a radio frequency transceiver (20), and a plurality of radio frequency modules (30); the radio frequency transceiver (20) comprises a first transmit channel set and a second transmit channel set, and at least one target radio frequency module among the plurality of radio frequency modules (30) can be switchably connected to any power supply module (10) and any radio frequency channel; the radio frequency signal bands supporting power amplification of different radio frequency modules (30) are different, target power supply modules of two radio frequency modules (30) operating simultaneously among the plurality of radio frequency modules (30) are different, and target radio frequency channels of two radio frequency modules (30) operating simultaneously are different. Consequently, relative to radio frequency modular sets having the same number of radio frequency modules (30) in related technology, more frequency band combinations can be achieved, the communication performance of radio frequency modular sets is improved, and user experience is improved.

## Description

### CROSS-REFERENCE OF RELATED APPLICATION

The application claims priority to Chinese Patent Application No. 2022115298431, filed on November 30, 2022, and titled "RADIO FREQUENCY ASSEMBLY AND COMMUNICATION DEVICE", the entire disclosure of which is incorporated herein by reference.

### TECHNICAL FIELD

The disclosure relates to the field of antenna technology, and particularly to a radio frequency assembly and a communication device.

### BACKGROUND

The statements herein merely provide background information related to the disclosure and do not necessarily constitute exemplary techniques.

With the development of radio frequency technology, there is an increasing demand for communication at different frequency bands. However, combined communication of more different frequency bands must rely on the support of a large quantity of radio frequency (RF) modules, which greatly limits the experience brought to users by a communication device with less radio frequency modules.

### SUMMARY

According to various embodiments of the disclosure, a radio frequency assembly and a communication device are provided, which can realize a combination of multiple frequency bands, enhancing the communication performance of the radio frequency assembly, and improving the user experience.

In a first aspect, embodiments of the disclosure provide a radio frequency assembly, including:
a plurality of power modules;
a radio frequency transceiver, including a first group of transmit channels and a second group of transmit channels, where each of the first group of transmit channels and the second group of transmit channels includes a plurality of transmit channels; and
a plurality of radio frequency modules, where at least one target radio frequency module is switchably connected to any one of the plurality of power modules and any one of radio frequency channels, and each of the plurality of radio frequency modules is configured to, when being powered by a target power module, receive a radio frequency signal transmitted from a target radio frequency channel, and perform power amplification on the received radio frequency signal;
where different ones of the multiple radio frequency modules are configured to support power amplification for radio frequency signals at different frequency bands, two radio frequency modules operating simultaneously among the plurality of radio frequency modules have different target power modules, and the two radio frequency modules operating simultaneously have different target radio frequency channels; the target power module is a power module connected to the radio frequency module, and the target radio frequency channel is a radio frequency channel connected to the radio frequency module.

In a second aspect, the embodiments of the disclosure provide a communication device, including the radio frequency assembly as described above.

In a third aspect, the embodiments of the disclosure provide a communication device, including:
a first power module and a second power module;
a radio frequency transceiver, including a first group of transmit channels and a second group of transmit channels, wherein each of the first group of transmit channels and the second group of transmit channels includes a plurality of transmit channels; and
a first radio frequency module, where the first radio frequency module is switchably connected to the first power module or the second power module, and the first radio frequency module is switchably connected to the first group of transmit channels or the second group of transmit channels, and the first radio frequency module is configured to support transmission of a radio frequency signal at a first frequency band; and
a second radio frequency module, where the second radio frequency module is connected to each of the first power module, the second power module, the first group of transmit channels and the second group of transmit channels; the second radio frequency module is configured to, when being powered by the first power module, support transmission of a radio frequency signal at a second frequency band from the first group of transmit channels, and the second radio frequency module is further configured to, when being powered by the second power module, support transmission of a radio frequency signal at a third frequency band from the second group of transmit channels.

Details of one or more embodiments of the disclosure are set forth in the following drawings and description. Other features, objects, and advantages of the disclosure will become apparent from the description, the drawings, and the claims.

### BRIEF DESCRIPTION OF THE DRAWINGS

In order to more clearly illustrate technical solutions in the embodiments of the disclosure or the related art, drawings to be used in the embodiments or in the related art are briefly described below. Apparently, the following drawings are merely some embodiments of the disclosure, and those skilled in the art can obtain other drawings according to these drawings without paying any creative effort.
FIG. 1 illustrates a first structural block diagram of a radio frequency assembly according to some embodiments of the disclosure.
FIG. 2 illustrates a second structural block diagram of the radio frequency assembly according to some embodiments.
FIG. 3 illustrates a third structural block diagram of the radio frequency assembly according to some embodiments.
FIG. 4 illustrates a fourth structural block diagram of the radio frequency assembly according to some embodiments.
FIG. 5 illustrates a fifth structural block diagram of the radio frequency assembly according to some embodiments.
FIG. 6 illustrates a sixth structural block diagram of the radio frequency assembly according to some embodiments.
FIG. 7 illustrates a seventh structural block diagram of the radio frequency assembly according to some embodiments.
FIG. 8 illustrates an eighth structural block diagram of the radio frequency assembly according to some embodiments.
FIG. 9 illustrates a ninth structural block diagram of the radio frequency assembly according to some embodiments.
FIG. 10 illustrates a first structural block diagram of a communication device according to some embodiments.
FIG. 11 illustrates a second structural block diagram of the communication device according to some embodiments.
FIG. 12 illustrates a third structural block diagram of the communication device according to some embodiments.
FIG. 13 illustrates a fourth structural block diagram of the communication device according to some embodiments.

### DETAILED DESCRIPTION OF PREFERRED EMBODIMENTS

In order to make objectives, technical solutions, and advantages of the disclosure clear, the disclosure is described in detail below in conjunction with the drawings and embodiments. It should be understood that the particular embodiments described herein are only used to explain the disclosure and are not intended to limit the disclosure.

It is understood that the terms "first", "second", etc. in the disclosure may be used herein to describe various elements, but these elements are not limited by these terms. These terms are only used to distinguish a first element from another element, and should not be construed as indicating or implying relative importance or implicitly indicating the number of the technical features referred to. Therefore, the feature preceded by "first", "second" or the like may explicitly or implicitly include at least one such feature. In the description of the disclosure, the term "a plurality of" means at least two, such as two, and three, unless otherwise specifically defined.

It is notable that when an element is referred to as being "provided on" another element, the element may be directly provided on another element or there may be an intermediate element therebetween. When an element is considered to be "connected to" another element, the element may be directly connected to another element or there may be an intermediate element therebetween.

A radio frequency assembly involved in the embodiments of the disclosure may be applied to a communication device with a wireless communication function. The communication device may be a handheld device, a vehicle-mounted device, a smart car, a wearable device, a computing device or other processing devices connected to a wireless modem, various user devices (UEs) (e.g., a mobile phone), a mobile station (MS), etc. For purposes of description, the above-mentioned devices are collectively referred to as the communication device.

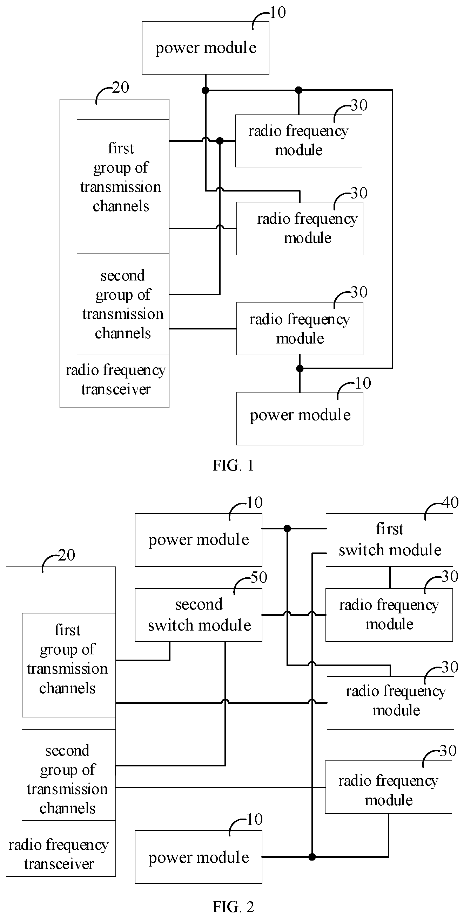

FIG. 1 illustrates a structural block diagram of a radio frequency assembly according to some embodiments. As illustrated in FIG. 1, in the embodiments, the radio frequency assembly includes multiple power modules 10, a radio frequency transceiver 20, and multiple radio frequency modules 30.

The radio frequency transceiver 20 includes a first group of transmit channels and a second group of transmit channels, each of the first group of transmit channels and the second group of transmit channels includes multiple transmit channels. Among the multiple radio frequency modules 30, at least one target radio frequency module is switchably connected to any one of the multiple power modules 10 and any one of multiple radio frequency channels (in FIG. 1, one target radio frequency module is illustrated as an example, and it only shows a case in which the target radio frequency module and other radio frequency modules 30 may be connected to the power modules 10). When being powered by a target power module, each radio frequency module 30 is configured to receive a radio frequency signal transmitted from the target radio frequency channel, and perform power amplification on the respective received radio frequency signal. Different radio frequency modules 30 support power amplification for radio frequency signals at different frequency bands. Two radio frequency modules 30 operating simultaneously in the multiple radio frequency modules 30 have different target power modules, and the two radio frequency modules 30 operating simultaneously have different target radio frequency channels, in which the target power module refers to a power module 10 connected to the radio frequency module 30, and the target radio frequency channel refers to a radio frequency channel connected to the radio frequency module 30.

There are multiple power modules 10, each of which may be connected to multiple radio frequency modules 30. Each power module 10 is configured to provide, when being connected to a radio frequency module 30, a power supply signal to the radio frequency module 30 connected thereto, so that the radio frequency module 30 may perform the power amplification on the radio frequency signal from the radio frequency transceiver 20. In some alternative embodiments, the power module 10, when being connected to a radio frequency module 30, may adjust the voltage according to the frequency band of the radio frequency signal for which the radio frequency module 30 needs to support the power amplification, so as to output the power supply signal suitable for the radio frequency module 30 to operate normally, thereby meeting the user's need. For example, the power module 10 may include a battery and a power management integrated circuit (PMIC) connected to the battery, so as to adjust the power of the battery and provide the adjusted power to the radio frequency module 30.

The transmit channels of the first group of transmit channels are independent from and do not interfere with the transmit channels of the second group of transmit channels. The first group of transmit channels and the second group of transmit channels are configured to output radio frequency signals of a first network standard and a second network standard to their connected radio frequency modules 30. The first network standard and the second network standard may be configured to be the same or different. The first network standard and the second network standard may include Global System for Mobile Communications (GSM), Universal Mobile Telecommunications System (UMTS), Long Term Evolution (LTE) and New Radio (NR), etc., and each network standard may include multiple frequency bands. In some alternative embodiments, taking the first network standard as the LTE network standard and the second network standard as the NR network standard as an example, the radio frequency signal of the first network standard may be referred to as a 4G LTE signal, and the radio frequency signal of the second network standard may be referred to as a 5G NR signal. The 4G LTE signals include low frequency signals, medium frequency signals, and high frequency signals, and the 5G NR signals include low frequency signals, medium frequency signals, high frequency signals, and ultra-high frequency signals. The division of frequency bands of low frequency signals, medium frequency signals, high frequency signals, and ultra-high frequency signals may be referred to in the following table.

| Frequency band | Frequency band of LTE signal | Frequency band of NR signal |
|---|---|---|
| L: low frequency | B5, B8, B12, B13, B14, B17, B18, B19, B20, B26, and B28A | N5, N8, N12, N13, N14, N17, N18, N19, N20, N26, and N28A |
| M: medium frequency | B1, B2, B3, B4, B25, B34, B39, and B66 | N1, N2, N3, N4, N25, N34, N39, and N66 |
| H: high frequency | B7, B30, B38, B40, and B41 | N7, N30, N38, N40, and N41 |
| UH: ultra-high frequency | | N77, N78, and N79 |

In order to achieve more combined communication of different frequency bands under dual SIM dual active (DSDA), the first network standard and the second network standard may be configured to be the same or different. Since the first group of transmit channels for the first network standard and the second group of transmit channels for the second network standard are independent of each other and do not interfere with each other, regardless of whether the first network standard and the second network standard are configured to be the same or different, the combined communication of different frequency bands under the DSDA can be realized. In order to achieve the combined communication of E-UTRA NR dual connectivity (ENDC, 4G and 5G dual connectivity), the first network standard and the second network standard need to be configured to be different, and one of the first network standard and the second network standard is an LTE network standard, and the other is an NR network standard.

There are multiple radio frequency modules 30, and each radio frequency module 30 is configured to, when being powered by the target power module, receive the radio frequency signal transmitted from the target radio frequency channel, and perform the power amplification on the respective received radio frequency signal. At least one of the multiple radio frequency modules 30 is switchably connected to any one of the power module 10 and any one of the radio frequency channels. In the embodiments, such radio frequency module 30 is defined as the target radio frequency module, the power module 10 connected to each radio frequency module 30 is defined as the target power module, and the radio frequency channel connected to each radio frequency module 30 is defined as the target radio frequency channel. It is understood that the target radio frequency module is capable of being connected to the multiple power modules 10, the first group of transmit channels and the second group of transmit channels, and the target radio frequency module may be connected to the target power module and the target radio frequency channel as required, so that the target radio frequency module may select to be powered by one of the power modules 10 as needed, and may further select to amplify the radio frequency signal of any radio frequency channel.

The inventors have found through creative work that, in the related art, in order to support the combined communication of different frequency bands under DSDA and/or the combined communication of ENDC (4G and 5G dual connectivity), two radio frequency modules 30 operating simultaneously must be connected to different radio frequency channels and powered by different power modules 10. In the embodiments of the disclosure, different radio frequency modules 30 support power amplification for radio frequency signals at different frequency bands, two radio frequency modules 30 operating simultaneously in the multiple radio frequency modules 30 have different target power modules, and the two radio frequency modules 30 have different target radio frequency channels, that is, two radio frequency modules 30 operating simultaneously have different target radio frequency channels and different target power modules.

Taking a case where the first group of transmit channels and the second group of transmit channels are configured for different network standards as an example, in the embodiments, the combined communication of different frequency bands under DSDA can be achieved, and the combined communication of ENDC and uplink carrier aggregation (CA) can further be achieved at the same time. In addition, since the target radio frequency module may have its target power module and target radio frequency channel switched, by means of the switching the target power module and the target radio frequency channel for the target radio frequency module may switch and the cooperation of other radio frequency modules 30, the radio frequency assembly provided in the embodiments can enable more combined communications under DSDA, more combined communications under ENDC and uplink CA, compared with a radio frequency assembly with the same number of radio frequency modules 30 in the related art.

In the above embodiments, by providing multiple power modules 10, the first group of transmit channels, the second group of transmit channels and multiple radio frequency modules 30, at least one target radio frequency module among the multiple radio frequency modules 30 is switchably connected to any power module 10 and any radio frequency channel. In addition, different radio frequency modules 30 support power amplification for radio frequency signals at different frequency bands, and two radio frequency modules 30 operating simultaneously among the multiple radio frequency modules 30 have different target power modules and different target radio frequency channels. In this way, the two radio frequency modules 30 operating simultaneously can enable the combined communication of different frequency bands under DSDA, and the uplink CA. When the first group of transmit channels and the second group of transmit channels are configured for different network standards, the ENDC combination may further be realized. In addition, by switching the target power module and the target radio frequency channel for the target radio frequency module, the radio frequency assembly provided in the embodiments can enable with more frequency band combinations, compared with the radio frequency assembly with the same number of radio frequency modules 30 in the related art. In this way, the communication performance of the radio frequency assembly is improved, and the user experience is improved.

In some embodiments, as illustrated in FIG. 2, the radio frequency assembly further includes at least one first switch module 40 and at least one second switch module 50 (in FIG. 2, it is illustrated by taking one target radio frequency module, one first switch module 40 and one second switch module 50 as an example).

Each first switch module 40 is configured with multiple first ends and a second end. The multiple first ends of each first switch module 40 are respectively connected to the multiple power modules 10, the second end of each first switch module 40 is connected to a power end of one respective target radio frequency module, and the first switch module 40 is configured to connect the target radio frequency module with the target power module. Each second switch module 50 is configured with two first ends and a second end. The two first ends of each second switch module 50 are respectively connected to the first group of transmit channels and the second group of transmit channels, and the second end of each second switch module 50 is connected to an input end of one respective target radio frequency module, and the second switch module 50 is configured to connect the target radio frequency module and the target radio frequency channel.

There may be one or more first switch modules 40 and one or more second switch modules 50. The second end of each first switch module 40 is connected to the power end of one respective target radio frequency module, so that the power end of the target radio frequency module is switchably connected to one of the multiple power modules 10. The second end of each second switch module 50 is connected to the input end of one respective target radio frequency module, so that the input end of the target radio frequency module is switchably connected to one of the first group of transmit channels and the second group of transmit channels. By controlling a conduction state of the first switch module 40 and a conduction state of the second switch module 50, the connections of the target radio frequency module with the target power module and the target radio frequency channel may be controlled. It is notable that there may be one or more power ends and input ends of the target radio frequency module. When there is one power end and one input end, the target radio frequency module may be connected to one respective first switch module 40 and one respective second switch module 50. When at least one of the power end and the input end is in number of more than one, the numbers of the first switch modules 40 and the second switch modules 50 corresponding to the target radio frequency module may be adjusted. The alternative embodiments are not further exemplified here, and reference may be made to the following description.

In some alternative implementations, each of the first switch module 40 and the second switch module 50 may include at least one switch device. For example, the switch device is a single-pole multi-throw switch. For example, when the power end of the target radio frequency module is capable of being connected to two power modules 10, the first switch module 40 may be a single-pole double-throw switch. Two first ends of the single-pole double-throw switch are respectively connected to output ends of the two power modules 10, and a second end of the single-pole double-throw switch is connected to the power end of the target radio frequency module.

By providing the first switch module 40 and the second switch module 50 corresponding to the target radio frequency module, the connection between each target radio frequency module with each power module 10, and the connection between each target radio frequency module with each radio frequency channel can be independently controlled, so that the power module 10 and the radio frequency channel can be switched precisely.

It may be understood that, in some other embodiments, the switch modules may also be provided in other combinations, as long as it is capable of controlling the switchable connection between the target radio frequency module with the power module 10, and the switchable connection between the target radio frequency module with the radio frequency channel, which is not further limited in the embodiments of the disclosure.

In some embodiments, each of the first switch module 40 and the second switch module 50 is also provided with a controlled end. The radio frequency transceiver 20 further includes a control circuit, which is connected to each of the controlled end of the first switch module 40 and the controlled end of the second switch module 50. The control circuit is configured to control the conduction states of the first switch module 40 and the second switch module 50 according to a target operating frequency band.

The control circuit is connected to each of the controlled end of the first switch module 40 and the controlled end of the second switch module 50, so as to control the conduction states of the first switch module 40 and the second switch module 50. In some alternative implementations, the radio frequency transceiver 20 may be provided with a control port. The radio frequency transceiver 20 is connected to the controlled end of the first switch module 40 and the controlled end of the second switch module 50 through the control port, so as to send control signals respectively to the first switch module 40 and the second switch module 50, thereby controlling the conduction states of the first switch module 40 and the second switch module, respectively. For example, the radio frequency transceiver 20 may be configured with one of a mobile industry processor interface (MIPI) port and a general-purpose input output (GPIO) port. The control circuit may be connected to each of the first switch module 40 and the second switch module 50 through the MIPI port or the GPIO port, so as to send a first control signal to the first switch module 40, and send a second control signal to the second switch module 50 to control the conduction states, thereby improving the control efficiency.

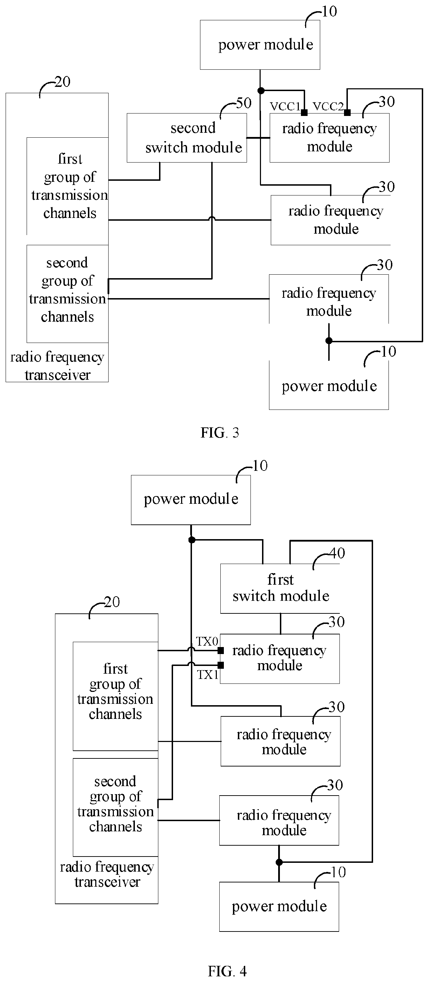

In some embodiments, the target radio frequency module includes a power amplifier unit. As illustrated in FIG. 3 (the power amplifier unit is not illustrated in FIG. 3), the target radio frequency module is configured with multiple power ports (the figure illustrates two power ports as an example, and the two power ports are referred to as VCC1 and VCC2 in the figure, respectively), and the multiple power ports are connected to the multiple power modules 10 respectively. The first switch module 40 is integrated in the target radio frequency module. The multiple first ends of the first switch module 40 are connected to the multiple power ports respectively, the second end of the first switch module 40 is connected to a power end of the power amplifier unit, and an input end of the power amplifier unit is connected to the second end of the second switch module 50.

The power amplifier unit is configured to perform the power amplification on the received radio frequency signal. The target radio frequency module is configured with multiple power ports. The first switch module 40 is integrated in the corresponding target radio frequency module. The multiple first ends of the first switch module 40 are connected to the multiple power modules 10 respectively through the multiple power ports, and the second end of the first switch module 40 is connected to the power end of the power amplifier unit. By integrating the first switch module 40 into the target radio frequency module, a mainboard area occupied by the radio frequency assembly can be reduced, and the integration level can be improved, which facilitates the miniaturization of the radio frequency assembly and reduces the cost.

It is understood that, when the power amplifier unit includes multiple power amplifiers, the first switch module 40 integrated in the target radio frequency module may be configured with only one second end, and the second end may be connected to the power ends of multiple power amplifiers at the same time; alternatively, the first switch module 40 may be configured with multiple second ends, each of the second ends is connected to the power end of one respective power amplifier. It is notable that, there may be one or more power amplifier units in the target radio frequency module. When there are multiple power amplifier units, the multiple power amplifier units may be powered by the same target power module or by different target power modules, and at least one of the multiple power amplifier units is connected to the corresponding first switch module 40 and second switch module 50, so that such power amplifier unit is switchably connected to any power module 10 and any radio frequency channel.

In some alternative embodiments, the multiple first switch modules 40 may be integrated into a corresponding power module 10 to improve integration, which is also beneficial to the miniaturization of the radio frequency assembly and reduction of cost.

In some embodiments, the target radio frequency module includes a power amplifier unit. As illustrated in FIG. 4 (the power amplifier unit is not illustrated in FIG. 4), the target radio frequency module is configured with a first input port and a second input port (referred to as TX0 and TX1 in the figure respectively). The first input port is connected to the first group of transmit channels, and the second input port is connected to the second group of transmit channels. The second switch module 50 is integrated into the target radio frequency module. The two first ends of the second switch module 50 are connected to the first input port and the second input port, respectively. The second end of the second switch module 50 is connected to an input end of the power amplifier unit, and a power end of the power amplifier unit is connected to the second end of the first switch module 40.

The power amplifier unit is configured to perform power amplification on the received radio frequency signal. The target radio frequency module is configured with a first input port and a second input port. The second switch module 50 is integrated in the corresponding target radio frequency module. The two first ends of the second switch module 50 are connected to the first group of transmit channels and the second group of transmit channels through the first input port and the second input port, respectively. The second end of the second switch module 50 is connected to the input end of the power amplifier unit. By integrating the second switch module 50 into the target radio frequency module, a mainboard area occupied by the radio frequency assembly can be reduced, and the integration level can be improved, which facilitates the miniaturization of the radio frequency assembly and reduces the cost.

It is understood that, when the power amplifier unit includes multiple power amplifiers, the second switch module 50 integrated in the target radio frequency module may have one second end. Such second end may be connected to the input ends of the multiple power amplifiers. Alternatively, such second end may be connected to the input ends of part of the power amplifiers through selective conduction of a radio frequency switch in the power amplifier unit. There may be multiple second ends of the second switch module 50, and the multiple second ends are connected to the input ends of the multiple power amplifiers, respectively. It is notable that there may be one or more power amplifier units in the target radio frequency module. When there are multiple power amplifier units, the multiple power amplifier units may be connected to different transmit channels in the radio frequency channels, and at least one of the multiple power amplifier units is switchably connected to any power module 10 and is switchably connected to any radio frequency channel.

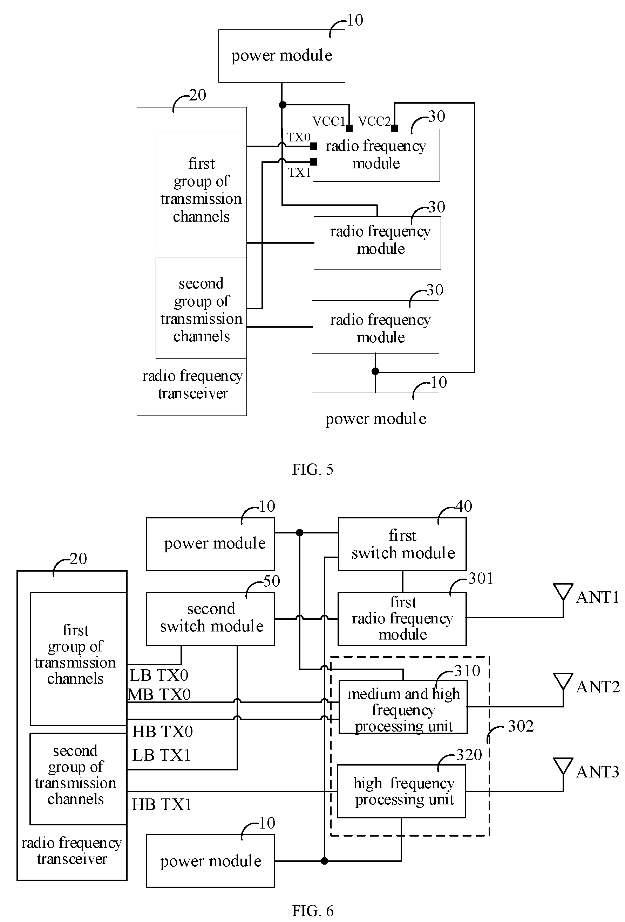

In some embodiments, as illustrated in FIG. 5 (the power amplifier unit is not illustrated in FIG. 5), the target radio frequency module may be configured with a first input port, a second input port and multiple power ports. The first switch module 40 and the second switch module 50 are both integrated in the target radio frequency module. For the connection relationship between the first input port, the second input port, the multiple power ports and various ports with the first switch module 40 and the second switch module 50, reference may be made to the relevant description in the above embodiments and will not be repeated here.

By integrating both of the first switch module 40 and the second switch module 50 into the target radio frequency module, the mainboard area occupied by the radio frequency assembly can be further reduced, and the integration level can be improved, which facilitates the miniaturization of the radio frequency assembly and reduces the cost.

It may be understood that, in some other embodiments, when the radio frequency assembly includes multiple target radio frequency modules, the first switch modules 40 and the second switch modules 50 corresponding to different target radio frequency modules may also be configured as different integrations. For example, when there are two target radio frequency modules, the first switch module 40 and the second switch module 50 corresponding to one of the target radio frequency modules may be integrated into such target radio frequency module, and the first switch module 40 and the second switch module 50 corresponding to the other target radio frequency module may be arranged outside the other target radio frequency module. In this way, large and small areas of a mainboard may be better utilized, thereby improving the occupancy rate of the mainboard area.

In some embodiments, the multiple radio frequency modules 30 include a first radio frequency module and a second radio frequency module.

The first radio frequency module is configured to perform power amplification on a low frequency signal. The second radio frequency module is configured to perform power amplification on a medium frequency signal and a high frequency signal.

The first radio frequency module receives the low frequency signal through the target radio frequency channel and performs power amplification on the low frequency signal. The second radio frequency module receives the medium frequency signal and the high frequency signal through the target radio frequency channels, and performs power amplification of the medium frequency signal and the high frequency signal. In some alternative embodiments, the first radio frequency module and the second radio frequency module may further be configured to implement other auxiliary functions, for example, to perform low-noise power amplification on a radio frequency signal from an antenna side, thereby enabling a receiving function. The first radio frequency module may be a low band power amplifier (PA) mid with low-noise amplifier (LNA) (LB L-PA Mid). The second radio frequency module may be a middle and high band PA mid with LNA (MHB L-PA Mid). Alternatively, the second radio frequency module may include MHB L-PA Mid and an LNA-PA ASM module with integrated filter (LPAF).

In some alternative embodiments, as illustrated in FIG. 6, the first group of transmit channels includes a first low frequency transmit channel, a first medium frequency transmit channel and a first high frequency transmit channel (referring to LB TX0, MB TX0 and HB TX0 in FIG. 6, respectively). The second group of transmit channels includes a second low frequency transmit channel and a second high frequency transmit channel (referring to LB TX1 and HB TX1 in FIG. 6, respectively). The first radio frequency module 301 is switchably connected to one of the first low frequency transmit channel and the second low frequency transmit channel, and is switchably connected to one of the multiple power modules 10. The second radio frequency module 302 includes a medium and high frequency processing unit 310 and a high frequency processing unit 320. A medium frequency input end of the medium and high frequency processing unit 310 is connected to the first medium frequency transmit channel, and a high frequency input end of the medium and high frequency processing unit 310 is connected to the first high frequency transmit channel. An input end of the high frequency processing unit 320 is connected to the second high frequency transmit channel, and a power end of the medium and high frequency processing unit 310 and a power end of the high frequency processing unit 320 are connected to different target power modules.

The first low frequency transmit channel, the first medium frequency transmit channel, and the first high frequency transmit channel are configured to output a low frequency signal, a medium frequency signal and a high frequency signal of the first network standard, respectively. The second low frequency transmit channel and the second high frequency transmit channel are configured to output a low frequency signal and a high frequency signal of the second network standard, respectively. For example, the first radio frequency module 301 may be an LBL-PA Mid. For example, the medium and high frequency processing unit 310 may be a MHB L-PA Mid. For example, the high-frequency processing unit 320 may be a N41 LPAF. The first radio frequency module 301, the medium and high frequency processing unit 310 and the high frequency processing unit 320 each may have characteristics of a high degree of device integration as well as device miniaturization, and are capable of realizing a transceiver function. Taking the first network standard as the LTE network standard and the second network standard as the NR network standard as an example, the low frequency signal of the first network standard may be for example B5, and B8 radio frequency signals, the medium frequency signal of the first network standard may be for example B1, and B3 radio frequency signals, and the high frequency signal of the first network standard may be for example a B41 radio frequency signal; the low frequency signal of the second network standard may be for example N5, and N8 radio frequency signals, and the high frequency signal of the second network standard may be for example a N41 radio frequency signal.

The first radio frequency module 301 is switchably connected to one of the first low frequency transmit channel and the second low frequency transmit channel, and is switchably connected to one of the multiple power modules 10, so that the first radio frequency module 301 may receive the low frequency signal of the first network standard, and may also be switched to receive the low frequency signal of the second network standard. The medium frequency input end of the medium and high frequency processing unit 310 is connected to the first medium frequency transmit channel, and the high frequency input end of the medium and high frequency processing unit 310 is connected to the first high frequency transmit channel, so that the medium and high frequency processing unit 310 may receive the medium frequency signal and the high frequency signal of the first network standard. The high frequency processing unit 320 is connected to the second high frequency transmit channel, so that the high frequency processing unit 320 may receive the high frequency signal of the second network standard.

In the related art, for the radio frequency assembly has the same number of the radio frequency modules as that in the embodiments, the first radio frequency module 301 and the medium and high frequency processing units 310 of the second radio frequency module 302 are connected to a same target power module and a same target radio frequency channel, and the high frequency processing unit 320 is connected to another target power module and another target radio frequency channel. Such radio frequency assembly cannot realize DSDA combinations of LB (the first network standard) +MB (the second network standard), MB (the first network standard) +LB (the second network standard), HB (the first network standard) +LB (the second network standard), the ENDC combination and the uplink under dual SIM cards. For numerous dual SIM card users, this will greatly limit the usage experience of dual SIM card. In the embodiments, taking the first group of transmit channels and the second group of transmit channels configured with different network standards as an example, through combinations of any two among the first radio frequency module 301 and the medium and high frequency processing unit 310 and the high frequency processing unit 320 of the second radio frequency module 302, dual-card DSDA combinations of at least LB+HB, MB+LB, MB+HB, HB+LB and HB+HB, the ENDC combination and the uplink CA can be realized, which improves the transmission performance of the radio frequency assembly and improves the user experience under dual cards.

In some alternative embodiments, the second group of transmit channels further includes a second medium frequency transmit channel. The medium frequency input end of the medium and high frequency processing unit 310 is switchably connected to one of the first medium frequency transmit channel and the second medium frequency transmit channel, and the power end of the medium and high frequency processing unit 310 is switchably connected to one of the multiple power modules 10.

The second medium frequency transmit channel is configured to output a medium frequency signal of the second network standard, and the medium frequency input end of the medium and high frequency processing unit 310 is switchably connected to one of the first medium frequency transmit channel and the second medium frequency transmit channel, so that the medium and high frequency processing unit 310 may receive the medium frequency signal and the high frequency signal of the first network standard, and may also receive the medium frequency signal of the second network standard. As such, taking the first group of transmit channels and the second group of transmit channels configured with different network standards as an example, through combinations between any two among the first radio frequency module 301 and the medium and high frequency processing units 310 and the high frequency processing units 320 of the second radio frequency module 302, dual-card DSDA combinations of at least LB+MB, LB+HB, MB+LB, MB+HB, HB+LB, HB+MB, and HB+HB can be realized.

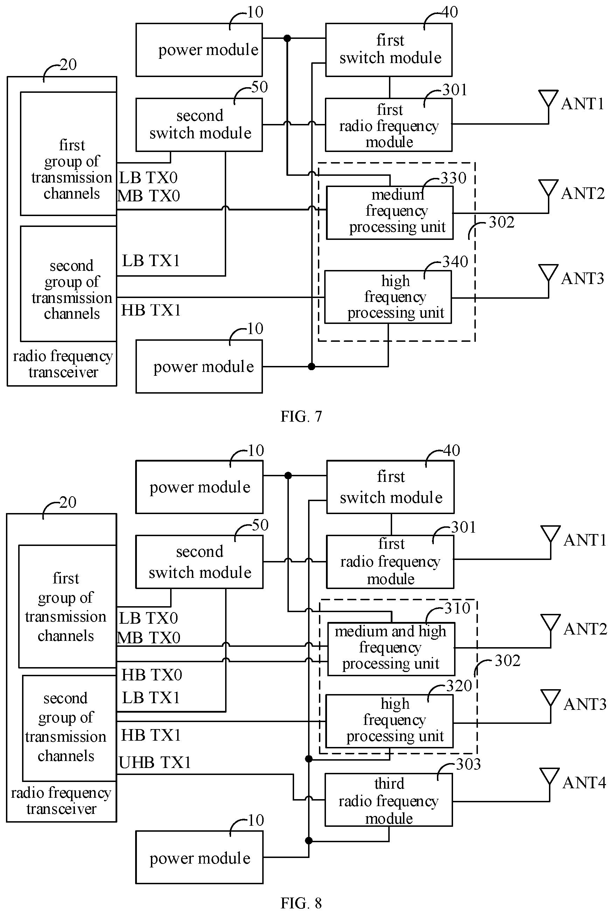

In some alternative embodiments, as illustrated in FIG. 7, the first group of transmit channels includes a first low frequency transmit channel and a first medium frequency transmit channel, and the second group of transmit channels includes a second low frequency transmit channel and a second high frequency transmit channel. The first radio frequency module 301 is switchably connected to one of the first low frequency transmit channel and the second low frequency transmit channel, and is switchably connected to one of multiple power modules 10. The second radio frequency module 302 includes a medium frequency processing unit 330 and a high frequency processing unit 340, the medium frequency processing unit 330 is connected to the first medium frequency transmit channel, the high frequency processing unit 340 is connected to the second high frequency transmit channel, and the medium frequency processing unit 330 and the high frequency processing unit 340 are connected to different power modules 10.

The first low frequency transmit channel and the first medium frequency transmit channel are configured to output a low frequency signal and a medium frequency signal of the first network standard, respectively. The second low frequency transmit channel and the second high frequency transmit channel are configured to output a low frequency signal and a high frequency signal of the second network standard, respectively. The first radio frequency module 301 may be an LBL-PA Mid, the medium frequency processing unit 330 and the high frequency processing unit 340 of the second radio frequency module 302 may be integrated with each other, and the medium frequency processing unit 330 and the high frequency processing unit 340 may operate simultaneously. The second radio frequency module 302 may be a MHB L-PA Mid supporting an ENDC dual-transmission function. In this way, the first radio frequency module 301 and the second radio frequency module 302 may both have the characteristics of a high degree of device integration as well as device miniaturization, and are capable of realizing a transceiver function.

The first radio frequency module 301 is switchably connected to one of the first low frequency transmit channel and the second low frequency transmit channel, and is switchably connected to one of the multiple power modules 10, so that the first radio frequency module 301 may receive the low frequency signal of the first network standard, and may also be switched to receive the low frequency signal of the second network standard. The medium frequency processing unit 330 is connected to the first medium frequency transmit channel, and the high frequency processing unit 340 is connected to the second high frequency transmit channel, so that the medium frequency processing unit 330 may receive the medium frequency signal of the first network standard, and the high frequency processing unit 340 may receive the high frequency signal of the second network standard.

In the related art, for the radio frequency assembly has the same number of the radio frequency modules as that in the embodiments, the first radio frequency module 301 and the medium frequency processing units 330 of the second radio frequency module 302 are connected to a same target power module and a same target radio frequency channel, and the high frequency processing unit 340 is connected to another target power module and another target radio frequency channel. Such radio frequency assembly cannot realize DSDA combinations of LB+MB and MB+LB, the ENDC combination and the uplink under dual SIM cards. For numerous dual SIM card users, this will greatly limit the usage experience of dual SIM card. In the embodiments, taking the first group of transmit channels and the second group of transmit channels configured with different network standards as an example, through combinations between any two among the first radio frequency module 301 and the medium frequency processing unit 330 and the high frequency processing unit 340 of the second radio frequency module 302, dual-card DSDA combinations of at least LB+HB, MB+LB and MB+HB, the ENDC combination and the uplink CA can be realized, which improves the transmission performance of the radio frequency assembly and improves the user experience under dual cards.

In some alternative embodiments, the second group of transmit channels further includes a second medium frequency transmit channel, an input end of the medium frequency processing unit 330 is switchably connected to one of the first medium frequency transmit channel and the second medium frequency transmit channel, and a power end of the medium frequency processing unit 330 is switchably connected to one of the multiple power modules 10. And/or, the first group of transmit channels further includes a first high frequency transmit channel, a high frequency input end of the high frequency processing unit 340 is switchably connected to one of the first high frequency transmit channel and the second high frequency transmit channel, and a power end of the high frequency processing unit 340 is switchably connected to one of the multiple power modules 10.

The second medium frequency transmit channel is configured to output the medium frequency signal of the second network standard, and the medium frequency processing unit 330 is switchably connected to one of the first medium frequency transmit channel and the second medium frequency transmit channel, so that the medium frequency processing unit 330 may receive the medium frequency signal of the first network standard or the medium frequency signal of the second network standard; and/or the high frequency processing unit 340 is switchably connected to one of the first high frequency transmit channel and the second high frequency transmit channel, so that the high frequency processing unit 340 may receive the high frequency signal of the first network standard or the high frequency signal of the second network standard.

Taking the case where the first group of transmit channels and the second group of transmit channels are configured with different network standards, when the medium frequency processing unit 330 may switch its target power module and target transmit channel, through the combinations between any two among the first radio frequency module 301, the medium frequency processing unit 330 and the high frequency processing unit 340 of the second radio frequency module 302, dual-card DSDA combination of at least LB+MB, LB+HB, MB+LB, and MB+HB, the ENDC combination and the uplink CA can be realized. And/or, when the high frequency processing unit 340 may switch its target power module and the target transmit channel, through a the combinations between any two among the first radio frequency module 301, the medium frequency processing unit 330 and the high frequency processing unit 340 of the second radio frequency module 302, dual-card DSDA combinations of at least LB+HB, MB+LB, MB+HB, and HB+LB, the ENDC combination and the uplink CA can be realized. Compared with the radio frequency assembly with the same number of radio frequency modules in the related art, the embodiments can enable more frequency band combinations.

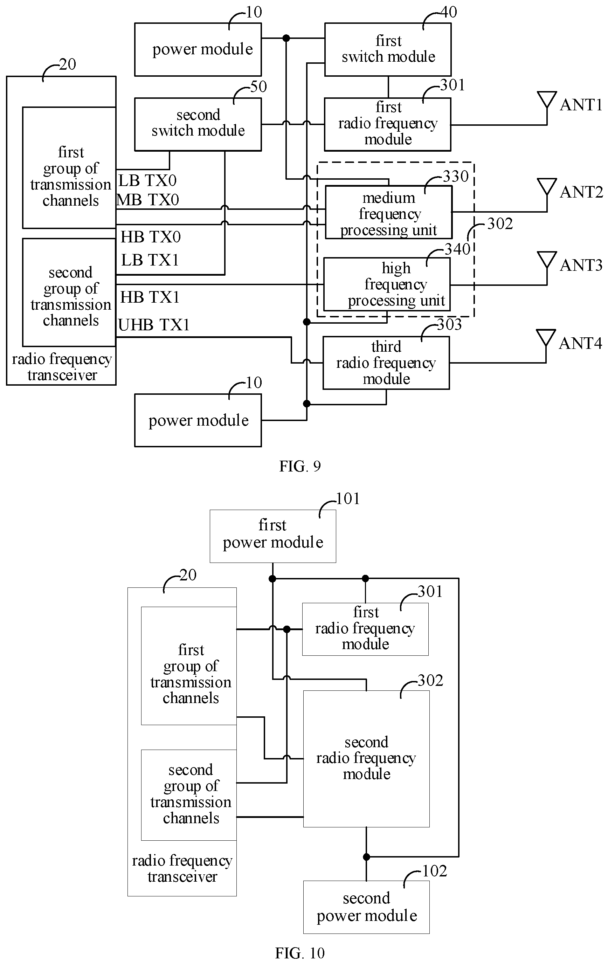

In some embodiments, based on the above embodiments, as illustrated in FIG. 8 and FIG. 9 (FIG. 8 is illustrated based on the embodiments illustrated in FIG. 6, and FIG. 9 is illustrated based on the embodiments illustrated in FIG. 7), the second group of transmit channels further includes an ultra-high frequency transmit channel (such as UHB TX1 illustrated in FIG. 8 and FIG. 9). The multiple radio frequency modules further include a third radio frequency module 303. The third radio frequency module 303 is connected to the ultra-high frequency transmit channel, and the third radio frequency module 303 is configured to perform power amplification on ultra-high frequency signals.

The third radio frequency module 303 receives the ultra-high frequency signal from the ultra-high frequency transmit channel and performs power amplification on the ultra-high frequency signal, in which the UHF signal is for example an N78 radio frequency signal. In some alternative implementations, the third radio frequency module 303 may further be configured to enable other auxiliary functions. For example, the third radio frequency module 303 may further be configured to perform low-noise power amplification on the radio frequency signal from an antenna side, so as to implement the receiving function. The third radio frequency module 303 may be an LPAF. In some alternative implementations, the third radio frequency module 303 may be configured to support one-way transmission and two-way reception (1T2R/2R), thereby further reducing the demand for peripheral devices of the assembly and achieving high performance and simplicity of the overall solution.

Therefore, based on the above embodiments, the radio frequency assembly may further realize the dual-card DSDA combinations, the ENDC combination and the uplink CA for the ultra-high frequency signal, which further increases the number of combinations and enhances the user experience.

It may be understood that, in the above embodiments, each radio frequency module 30 and each processing unit may further be connected to a respective antenna through a radio frequency front-end module (the antennas are such as ANT1, ANT2, ANT3 and ANT4 in FIGs. 6 to 9, and the radio frequency front-end module is not illustrated in FIGs. 6 to 9), so as to output, through the radio frequency front-end module, the power-amplified radio frequency signal to the respective antenna for radiation outward.

The division of the various modules and circuits in the above-mentioned radio frequency assembly is only for illustration. In some other embodiments, the radio frequency module may include different modules as needed to implement all or part of the functions of the above-mentioned radio frequency assembly.

Some embodiments of the disclosure further provide a communication device, which may include the radio frequency assembly of any of the above embodiments. The communication device may switch the target power module and the target radio frequency channel of the target radio frequency module, so that the radio frequency assembly provided by these embodiments may enabled the combined communication at more frequency bands, compared to the radio frequency module with the same number of the radio frequency modules in the related art. In this way, the communication performance is improved, thereby enhancing the user experience.

Some embodiments of the disclosure further provide another communication device. As illustrated in FIG. 10, the communication device may include a first power module 101, a second power module 102, a radio frequency transceiver 20, a first radio frequency module 301, and a second radio frequency module 302.

The first power module 101 and the second power module 102 are included. The radio frequency transceiver 20 includes a first group of transmit channels and a second group of transmit channels, and each of the first group of transmit channels and the second group of transmit channels includes multiple transmit channels. The first radio frequency module 301 is switchably connected to the first power module 101 or the second power module 102, and is switchably connected to the first group of transmit channels or the second group of transmit channels. The first radio frequency module 301 is configured to support transmission of a radio frequency signal at a first frequency band. The second radio frequency module 302 is connected to each of the first power module 101, the second power module 102, the first group of transmit channels and the second group of transmit channels. The second radio frequency module 302 is configured to, when being powered by the first power module 101, support transmission of a radio frequency signal at a second frequency band from the first group of transmit channels. The second radio frequency module 301 is further configured to, when being powered by the second power module 102, support transmission of a radio frequency signal at a third frequency band from the second group of transmit channels.

For the first power module 101, the second power module 102, the radio frequency transceiver 20, the first radio frequency module 301 and the second radio frequency module 302, reference may be made to the relevant description in the above-mentioned embodiments of the radio frequency assembly, which will not be repeated here.

In some alternative implementations, the radio frequency signal at the first frequency band may be a low frequency signal; the radio frequency signal at the second frequency band may include a medium frequency signal and a high frequency signal; and the radio frequency signal at the third frequency band may be a high frequency signal. In this way, the communication device may implement the combined communications of LB+MB and LB+HB by switching the power modules and groups of radio frequency channels for the first radio frequency module 301. It may be understood that, in some other embodiments, the first frequency band may alternatively be a radio frequency signal at a frequency band other than the low frequency, and the radio frequency signals at the second and third frequency bands may alternatively be radio frequency signals at other frequency bands, so as to realize other combined communications.

In the above embodiment, the first power module 101, the second power module 102, the first group of transmit channels, the second group of transmit channels, the first radio frequency module 301 and the second radio frequency module 302 are provided. The first radio frequency module 301 is switchably connected to the first power module 101 or the second power module 102, and is switchably connected to the first group of transmit channels or the second group of transmit channels, so as to support the transmission of the radio frequency signal at the first frequency band. The second radio frequency module 302 is connected to each of the first power module 101, the second power module 102, the first group of transmit channels and the second group of transmit channels. The second radio frequency module 302 is configured to, when being powered by the first power module 101, support the transmission of the radio frequency signal at the second frequency band from the first group of transmit channels. The second radio frequency module 302 is further configured to, when being powered by the second power module 102, support the transmission of the radio frequency signal at the third frequency band from the second group of transmit channels. In this way, the first radio frequency module 301 and the second radio frequency module 302 operating simultaneously can enable the combination communications of different frequency bands under DSDA, and the uplink CA. When the first group of transmit channels and the second group of transmit channels are configured with different network standards, the ENDC combination may further be enabled. By switching the power modules and the groups of radio frequency channels for the first radio frequency module 301, the communication device provided in the embodiments can realize the combination of more frequency bands, relative to the communication device with the same number of radio frequency modules in the related technology, which improves the communication performance of the communication device, thereby improving the user experience.

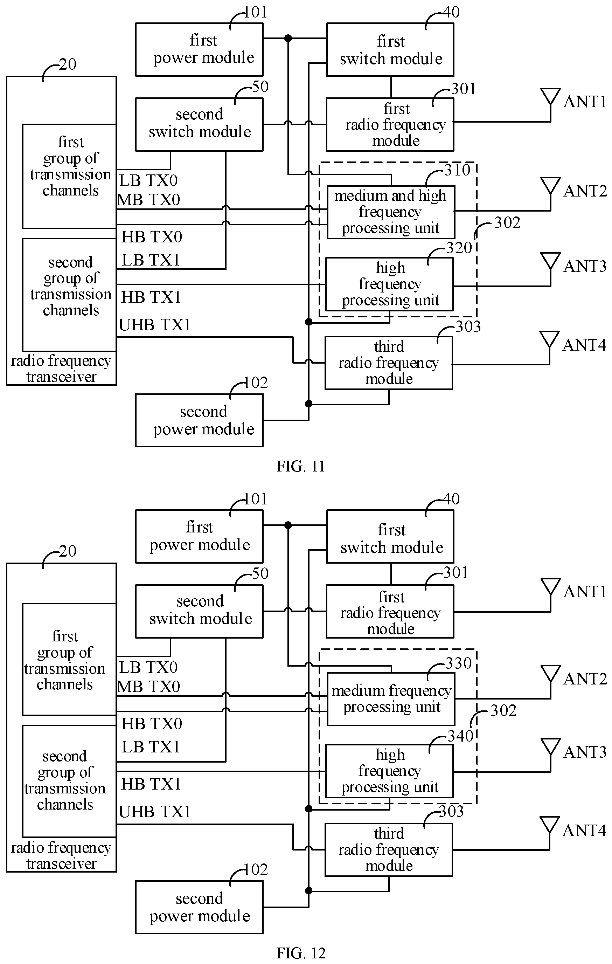

In some embodiments, as illustrated in FIG. 11, the communication device further includes a first switch module 40 and a second switch module 50.

The first group of transmit channels includes a first low frequency transmit channel, a first medium frequency transmit channel and a first high frequency transmit channel. The second group of transmit channels includes a second low frequency transmit channel and a second high frequency transmit channel. The first radio frequency module 301 is switchably connected to the first power module 101 or the second power module 102 through the first switch module 40, and is switchably connected to the first low frequency transmit channel or the second low frequency transmit channel through the second switch module 50.

In some embodiments, referring to FIG. 11, the second radio frequency module 302 includes a medium and high frequency processing unit 310 and a high frequency processing unit 320.

The medium and high frequency processing unit 310 has a medium frequency input end connected to the first medium frequency transmit channel, a high frequency input end connected to the first high frequency transmit channel, and a power end connected to the first power module 101. The medium and high frequency processing unit 310 is configured to perform power amplification on a first medium frequency signal and a first high frequency signal. The high frequency processing unit 320 has an input end connected to the second high frequency transmit channel, and a power end connected to the second power module 102. The high frequency processing unit 320 is configured to perform power amplification on a second high frequency signal.

In some alternative embodiments, the second group of transmit channels further includes a second medium frequency transmit channel. The medium frequency input end of the medium and high frequency processing unit 310 is switchably connected to the first medium frequency transmit channel or the second medium frequency transmit channel, and the power end of the medium and high frequency processing unit 310 is switchably connected to the first power module 101 or the second power module 102.

In some embodiments, as illustrated in FIG. 12, the communication device further includes a first switch module 40 and a second switch module 50.

The first group of transmit channels includes a first low frequency transmit channel, and a first medium frequency transmit channel. The second group of transmit channels includes a second low frequency transmit channel and a second high frequency transmit channel. The first radio frequency module 301 is switchably connected to the first power module 101 or the second power module 102 through the first switch module 40, and is switchably connected to the first low frequency transmit channel or the second low frequency transmit channel through the second switch module 50.

In some embodiments, as illustrated in FIG. 12, the second radio frequency module 302 includes a medium frequency processing unit 330 and a high frequency processing unit 340.

The medium frequency processing unit 330 is connected to each of the first medium frequency transmit channel and the first power module 101, and is configured to perform power amplification on the first medium frequency signal. The high frequency processing unit 340 is connected to each of the second high frequency transmit channel and the second power module 102, and is configured to perform power amplification on the second high frequency signal.

In some alternative embodiments, the second group of transmit channels further includes a second medium frequency transmit channel, an input end of the medium frequency processing unit 330 is switchably connected to the first medium frequency transmit channel or the second medium frequency transmit channel, and a power end of the medium frequency processing unit 330 is switchably connected to the first power module 101 or the second power module 102. And/or, the first group of transmit channels further includes a first high frequency transmit channel. A high frequency input end of the high frequency processing unit 340 is switchably connected to the first high frequency transmit channel or the second high frequency transmit channel, and a power end of the high frequency processing unit 340 is switchably connected to the first power module 101 or the second power module 102.

In some embodiments, referring to FIG. 11 and FIG. 12, the second group of transmit channels further includes an ultra-high frequency transmit channel, and the communication device further includes a third radio frequency module 303.

The third radio frequency module 303 is connected to each of the second power module 102 and the ultra-high frequency transmit channel, and is configured to support transmission of an ultra-high frequency signal.

In some embodiments, when the communication device is configured to support the combined communication of the first frequency band and the second frequency band, the first radio frequency module 301 is switched, through the first switch module 40, to being connected to the second power module 102, and is switched, through the second switch module 50, to being connected to the second low frequency transmit channel.

The first frequency band is a low frequency band, and the second frequency band may be a medium frequency band and/or a high frequency band of the network standard corresponding to the first group of transmit channels. The first radio frequency module 301, through the switching of the first switch module 40 and the second switch module 50, enables the communication device to realize requirements of the combined communication of the first frequency band and the second frequency band, which improves the communication performance of the communication device, thereby improving the user experience.

In some embodiments, when the communication device is configured to support the combined communication of the first frequency band and the third frequency band, the first radio frequency module 301 is switched, through the first switch module 40, to being connected to the first power module 101, and is switched, through the second switch module 50, to being connected to the first low frequency transmit channel.

The first frequency band is the low frequency band, and the third frequency band may be a medium frequency band and/or a high frequency band of the network standard corresponding to the second group of transmit channels. The first radio frequency module 301, through the switching of the first switch module 40 and the second switch module 50, enables the communication device to realize requirements of the combined communication of the first frequency band and the third frequency band, which improves the communication performance of the communication device, thereby improving the user experience.

In the above embodiment, for the first switch module 40, the second switch module 50, the first low frequency transmit channel, the first medium frequency transmit channel, the first high frequency transmit channel, the second low frequency transmit channel, the second high frequency transmit channel, the ultra-high frequency transmit channel, the medium and high frequency processing unit 310, the high frequency processing unit 320, the medium frequency processing unit 330, the high frequency processing unit 340 and the third radio frequency module 303 of the communication device, reference may be made to the relevant description in the above embodiments of the radio frequency assembly, and will not be repeated here. It may be understood that at least one of the first switch module 40 and the second switch module 50 in the embodiments may be integrated in the first radio frequency module 301, thereby further improving the integration and reducing the cost.

In the above embodiments, the first group of transmit channels may be configured to be connected with a first SIM card to output a radio frequency signal corresponding to the first SIM card, and the second group of transmit channels may be configured to be connected with a second SIM card to output a radio frequency signal corresponding to the second SIM card.

The SIM card may be called a user identity card, a smart card, etc. In some alternative implementations, the first SIM card and the second SIM card may be installed on a circuit board in the communication device. The first SIM card may be used as an information storage device to store user's identity information or store user's personal information, etc. The second SIM card may also be used as an information storage device to store user's identity information, user's personal information, etc.

The first SIM card may be configured to support the communication of the first network standard, and the second SIM card may be configured to support the communication of the second network standard. For the description of the first network standard and the second network standard, reference may be made to the above embodiments, which will not be repeated here. Since the first SIM card corresponds to the first group of transmit channels and the second SIM card corresponds to the second group of transmit channels, when the second SIM card carries out the communication, the interaction and use of the first SIM card would not be affected; and when the first SIM card carries out the communication, the interaction and use of the second SIM card would also not be affected. Thus, the communication device can realize dual-card dual-pass.

The division of the various modules and circuits in the above-mentioned communication device is only for illustration. In other embodiments, the communication device may include different modules as needed to implement all or part of the functions of the above-mentioned communication device.

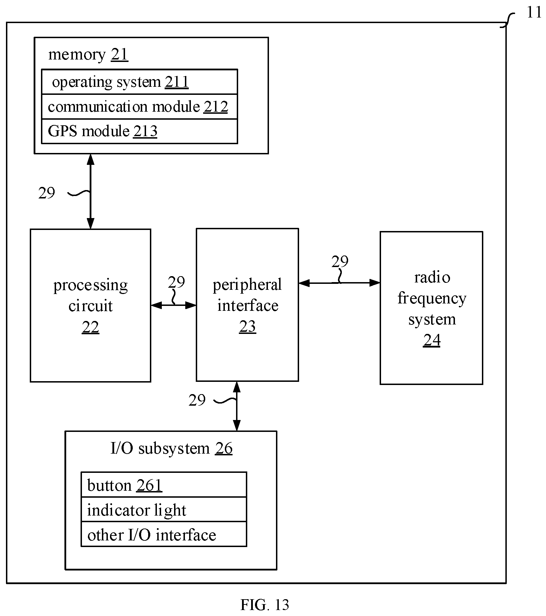

In addition, the above-mentioned communication device is described by taking a mobile phone 11 as an example. As illustrated in FIG. 13, the mobile phone 11 may include a memory 21 (which optionally includes one or more computer-readable storage media), a processor 22, a peripheral interface 23, a radio frequency system 24, and an input/output (I/O) subsystem 26. These components optionally communicate through one or more communication buses or signal lines 29. Those skilled in the art may understand that the structure of the mobile phone 11 shown in FIG. 13 does not constitute a limitation on the mobile phone, and the mobile phone may include more or fewer components than those shown in the figure, or combine some components, or have different component arrangements. The various components shown in FIG. 13 are implemented in hardware, software, or a combination of hardware and software, including one or more signal processing circuits and/or application-specific integrated circuits.

The memory 21 optionally includes a high-speed random access memory and optionally also includes a non-volatile memory, such as one or more magnetic disk storage devices, flash memory devices, or other non-volatile solid-state memory devices. Exemplarily, the software components stored in the memory 21 include an operating system 211, a communication module (or an instruction set) 212, a global positioning system (GPS) module (or an instruction set) 213, etc.

The processor 22 and other control circuits (such as a control circuit in the radio frequency system 24) may be configured to control the operations of the mobile phone 11. The processor 22 may be based on one or more microprocessors, microcontrollers, digital signal processors, baseband processors, power management units, audio codec chips, application-specific integrated circuits, etc.

The processor 22 may be configured to implement a control algorithm for controlling the use of an antenna in the mobile phone 11. The processor 22 may also transmit a control command for controlling switches in the radio frequency system 24, and the like.

The I/O subsystem 26 couples input/output peripherals on the mobile phone 11, such as a keypad and other input control devices, to the peripheral interface 23. The I/O subsystem 26 optionally includes a touch screen, a button, a tone generator, an accelerometer (motion sensor), an ambient light sensor and other sensors, a light emitting diode and other status indicators, a data interface, etc. Exemplarily, a user may control the operation of the mobile phone 11 by issuing a command via the I/O subsystem 26, and may use the output resources of the I/O subsystem 26 to receive status information and other output from the mobile phone 11. For example, a user may press a button 261 to activate the mobile phone or turn off the mobile phone.

The radio frequency system 24 may include the radio frequency assembly in any of the aforementioned embodiments.

Any reference to memory, storage, database, or other media used herein may include a non-transitory and/or a transitory memory. The non-transitory memory may include a read only memory (ROM), a programmable ROM (PROM), an electrically programmable ROM (EPROM), an electrically erasable programmable ROM (EEPROM), or a flash memory. The transitory memory may include a random access memory (RAM) that acts as an external cache memory. As illustration, rather than limitation, an RAM is available in various forms such as a static RAM (SRAM), a dynamic RAM (DRAM), a synchronous DRAM (SDRAM), a double data Rate SDRAM (DDR SDRAM), an enhanced SDRAM (ESDRAM), a synchlink DRAM (SLDRAM), a rambus direct RAM (RDRAM), a direct rambus dynamic RAM (DRDRAM), and a rambus dynamic RAM (RDRAM).

Various technical features of the above embodiments may be arbitrarily combined. To make the description concise, not all possible combinations of the technical features in the above embodiments are described. However, the combinations of these technical features without contradiction shall fall within the scope of this specification.

The foregoing embodiments show only several implementations of this disclosure and are described in detail, which however are not to be construed as a limitation to the scope of this disclosure. It is notable that, for those skilled in the art, several modifications and improvements can be made without departing from the idea of this disclosure, but which all fall within the protection scope of this disclosure. Therefore, the protection scope of the disclosure should be subject to the appended claims.

## Claims

1. A radio frequency assembly, comprising:
a plurality of power modules;
a radio frequency transceiver, comprising a first group of transmit channels and a second group of transmit channels, wherein each of the first group of transmit channels and the second group of transmit channels comprises a plurality of transmit channels; and
a plurality of radio frequency modules, wherein at least one target radio frequency module is switchably connected to any one of the plurality of power modules and any one of radio frequency channels, and each of the plurality of radio frequency modules is configured to, when being powered by a target power module, receive a radio frequency signal transmitted from a target radio frequency channel, and perform power amplification on the received radio frequency signal;
wherein different ones of the plurality of radio frequency modules are configured to support power amplification for radio frequency signals at different frequency bands, two radio frequency modules operating simultaneously among the plurality of radio frequency modules have different target power modules, and the two radio frequency modules operating simultaneously have different target radio frequency channels; the target power module is a power module connected to the radio frequency module, and the target radio frequency channel is a radio frequency channel connected to the radio frequency module.

2. The radio frequency assembly as claimed in claim 1, further comprising:
at least one first switch module, wherein for each of the at least one first switch module, the first switch module is configured with a plurality of first ends and a second end, the plurality of first ends of the first switch module are connected to the plurality of power modules respectively, the second end of the first switch module is connected to a power end of a respective one target radio frequency module, and the first switch module is configured to connect the one target radio frequency module with a respective target power module; and
at least one second switch module, wherein for each of the at least one second switch module, the second switch module is configured with two first ends and a second end, the two first ends of the second switch module are connected to the first group of transmit channels and the second group of transmit channels respectively, the second end of the second switch module is connected to an input end of a respective one target radio frequency module, and the second switch module is configured to connect the one target radio frequency module with a respective target radio frequency channel.

3. The radio frequency assembly as claimed in claim 2, wherein each of the at least one target radio frequency module comprises a power amplifier unit, each of the at least one target radio frequency module is configured with a plurality of power ports, and the plurality of power ports are connected to the plurality of power modules respectively;
each of the at least one first switch module is integrated in a respective target radio frequency module, the plurality of first ends of each first switch module are connected to the plurality of power ports respectively, the second end of each first switch module is connected to a power end of the power amplifier unit, and an input end of the power amplifier unit is connected to the second end of a respective second switch module.

4. The radio frequency assembly as claimed in claim 2, wherein each of the at least one target radio frequency module comprises a power amplifier unit, each of the at least one target radio frequency module is configured with a first input port and a second input port, the first input port is connected to the first group of transmit channels, and the second input port is connected to the second group of transmit channels; and
wherein a respective second switch module is integrated in each target radio frequency module, the two first ends of each second switch module are connected to the first input port and the second input port respectively, the second end of each second switch module is connected to the input end of the power amplifier unit, and a power end of the power amplifier unit is connected to the second end of one first switch module.

5. The radio frequency assembly as claimed in claim 2, wherein each of the at least one first switch module and the at least one second switch module is further configured with a controlled end; and
wherein the radio frequency transceiver further comprises a control circuit, the control circuit is connected to each of the controlled end of the at least one first switch module and the controlled end of the at least one second switch module, and the control circuit is configured to control a conduction state of the first switch module and a conduction state of the second switch module according to a target operating frequency band.

6. The radio frequency assembly as claimed in any one of claims 2 to 5, further comprising:
a first radio frequency module, configured to perform power amplification on a low frequency signal; and
a second radio frequency module, configured to perform power amplification on a medium frequency signal and a high frequency signal.

7. The radio frequency assembly as claimed claim 6, wherein the first group of transmit channels comprises a first low frequency transmit channel, a first medium frequency transmit channel, and a first high frequency transmit channel, and the second group of transmit channels comprises a second low frequency transmit channel and a second high frequency transmit channel; and
wherein the first radio frequency module is switchably connected to the first low frequency transmit channel or the second low frequency transmit channel, and the first radio frequency module is switchably connected to one of the plurality of power modules; and the second radio frequency module comprises a medium and high frequency processing unit and a high frequency processing unit, a medium frequency input end of the medium and high frequency processing unit is connected to the first medium frequency transmit channel, a high frequency input end of the medium and high frequency processing unit is connected to the first high frequency transmit channel, an input end of the high frequency processing unit is connected to the second high frequency transmit channel, and a power end of the medium and high frequency processing unit and a power end of the high frequency processing unit are connected to different target power modules.

8. The radio frequency assembly as claimed claim 7, wherein the second group of transmit channels further comprises a second medium frequency transmit channel, the medium frequency input end of the medium and high frequency processing unit is switchably connected to the first medium frequency transmit channel or the second medium frequency transmit channel, and the power end of the medium and high frequency processing unit is switchably connected to one of the plurality of the power modules.

9. The radio frequency assembly as claimed in claim 6, wherein the first group of transmit channels comprises a first low frequency transmit channel and a first medium frequency transmit channel, and the second group of transmit channels comprises a second low frequency transmit channel and a second high frequency transmit channel;
wherein the first radio frequency module is switchably connected to the first low frequency transmit channel or the second low frequency transmit channel, and the first radio frequency module is switchably connected to one of the plurality of power modules; the second radio frequency module comprises a medium frequency processing unit and a high frequency processing unit, the medium frequency processing unit is connected to the first medium frequency transmit channel, the high frequency processing unit is connected to the second high frequency transmit channel, and the medium frequency processing unit and the high frequency processing unit are connected to different power modules.

10. The radio frequency assembly as claimed in claim 9, wherein the second group of transmit channels further comprises a second medium frequency transmit channel, an input end of the medium frequency processing unit is switchably connected to the first medium frequency transmit channel or the second medium frequency transmit channel, and a power end of the medium frequency processing unit is switchably connected to one of the plurality of the power modules; and/or
the first group of transmit channels further comprises a first high frequency transmit channel, a high frequency input end of the high frequency processing unit is switchably connected to the first high frequency transmit channel or the second high frequency transmit channel, and a power end of the high frequency processing unit is switchably connected to one of the plurality of power modules.

11. The radio frequency assembly as claimed in any one of claims 7 to 10, wherein the second group of transmit channels further comprises an ultra-high frequency transmit channel, the plurality of radio frequency modules further comprise a third radio frequency module, the third radio frequency module is connected to the ultra-high frequency transmit channel, and the third radio frequency module is configured to perform power amplification on an ultra-high frequency signal.

12. A communication device, comprising:
the radio frequency assembly as claimed in any one of claims 1 to 11.

13. The communication device as claimed in claim 12, wherein the first group of transmit channels is configured to be connected to a first SIM card to output a radio frequency signal corresponding to the first SIM card, and the second group of transmit channels is configured to be connected to a second SIM card to output a radio frequency signal corresponding to the second SIM card.

14. A communication device, comprising:
a first power module and a second power module;
a radio frequency transceiver, comprising a first group of transmit channels and a second group of transmit channels, wherein each of the first group of transmit channels and the second group of transmit channels comprises a plurality of transmit channels;
a first radio frequency module, wherein the first radio frequency module is switchably connected to the first power module or the second power module, and the first radio frequency module is switchably connected to the first group of transmit channels or the second group of transmit channels, and the first radio frequency module is configured to support transmission of a radio frequency signal at a first frequency band; and
a second radio frequency module, wherein the second radio frequency module is connected to each of the first power module, the second power module, the first group of transmit channels and the second group of transmit channels; the second radio frequency module is configured to, when being powered by the first power module, support transmission of a radio frequency signal at a second frequency band from the first group of transmit channels, and the second radio frequency module is further configured to, when being powered by the second power module, support transmission of a radio frequency signal at a third frequency band from the second group of transmit channels.

15. The communication device as claimed in claim 14, wherein the communication device further comprises a first switch module and a second switch module;
the first group of transmit channels comprises a first low frequency transmit channel, a first medium frequency transmit channel, and a first high frequency transmit channel; and the second group of transmit channels comprises a second low frequency transmit channel and a second high frequency transmit channel; and
the first radio frequency module is switchably connected to the first power module or the second power module through the first switch module, and the first radio frequency module is switchably connected to the first low frequency transmit channel or the second low frequency transmit channel through the second switch module.

16. The radio frequency assembly as claimed in claim 15, wherein the second radio frequency module comprises:
a medium and high frequency processing unit, wherein a medium frequency input end of the medium and high frequency processing unit is connected to the first medium frequency transmit channel, a high frequency input end of the medium and high frequency processing unit is connected to the first high frequency transmit channel, a power end of the medium and high frequency processing unit is connected to the first power module, and the medium and high frequency processing unit is configured to perform power amplification on a first medium frequency signal and a first high frequency signal; and
a high frequency processing unit, wherein an input end of the high frequency processing unit is connected to the second high frequency transmit channel, a power end of the high frequency processing unit is connected to the second power module, and the high frequency processing unit is configured to perform power amplification on a second high frequency signal.

17. The communication device as claimed in claim 14, wherein the communication device further comprises a first switch module and a second switch module;
the first group of transmit channels comprises a first low frequency transmit channel and a first medium frequency transmit channel, and the second group of transmit channels comprises a second low frequency transmit channel and a second high frequency transmit channel; and
the first radio frequency module is switchably connected to the first power module or the second power module through the first switch module, and the first radio frequency module is switchably connected to the first low frequency transmit channel or the second low frequency transmit channel through the second switch module.

18. The radio frequency assembly as claimed in claim 17, wherein the second radio frequency module comprises:
a medium frequency processing unit, wherein the medium frequency processing unit is connected to each of the first medium frequency transmit channel and the first power module, and is configured to perform power amplification on a first medium frequency signal; and
a high frequency processing unit, wherein the high frequency processing unit is connected to each of the second high frequency transmit channel and the second power module, and is configured to perform power amplification on a second high frequency signal.

19. The communication device as claimed in any one of claims 15 to 18, wherein when the communication device is configured to support combined communication of the first frequency band and the second frequency band, the first radio frequency module is configured to be switched, through the first switch module, to being connected to the second power module, and switched, through the second switch module, to being connected to the second low frequency transmit channel.

20. The communication device as claimed in any one of claims 15 to 18, wherein when the communication device is configured to support combined communication of the first frequency band and the third frequency band, the first radio frequency module is configured to be switched, through the first switch module, to being connected to the first power module, and switched, through the second switch module, to being connected to the first low frequency transmit channel.

21. The communication device as claimed in any one of claims 15 to 18, wherein the second group of transmit channels further comprises an ultra-high frequency transmit channel, and the communication device further comprises:
a third radio frequency module, wherein the third radio frequency module is connected to each of the second power module and the ultra-high frequency transmit channel, and the third radio frequency is configured to support transmission of an ultra-high frequency signal.
